## Europäisches Patentamt
## European Patent Office
## Office européen des brevets

(11) Veröffentlichungsnummer: **0 395 062**
**A2**

## (12) EUROPÄISCHE PATENTANMELDUNG

(21) Anmeldenummer: **90107964.0**

(51) Int. Cl.⁵: **G02F 3/00**

(22) Anmeldetag: **26.04.90**

(30) Priorität: **27.04.89 SU 4685077**

(43) Veröffentlichungstag der Anmeldung:
**31.10.90 Patentblatt 90/44**

(84) Benannte Vertragsstaaten:
**AT BE CH DE FR GB IT LI NL SE**

(71) Anmelder: **TSENTR NAUCHNO-TEKHNICHESKOGO TVORCHESTVA MOLODEZHI " LINAX"**
**Ulitsa Marshala Govorova, 34**
**Leningrad(SU)**

(72) Erfinder: **Bystrov, Jury Lvovich**
**prospekt 30-letia Pobedy, 30, kv. 160**
**Penza(SU)**
Erfinder: **Esin, Anatoly Andreevich**
**ulitsa Svetlaya, 13, kv. 20**
**Penza(SU)**
Erfinder: **Lomashevich, Svyatoslav Alexandrovich**
**Pargolovo, ulitsa Zavodskaya, 24, kv. 7**
**Leningrad(SU)**
Erfinder: **Propalov, Oleg Nikolaevich**
**Petergofskoe shosse, 21, korpus 1, kv. 356**
**Leningrad(SU)**

(74) Vertreter: **Sparing Röhl Henseler**
**Patentanwälte European Patent Attorneys**
**Rethelstrasse 123**
**D-4000 Düsseldorf 1(DE)**

(54) **Nichtlineares optisches Element.**

(57) Zwecks Verstärkung optischer Signale und zwecks Erhöhung der Schwellensensibilität optischer Elemente gegenüber Eingangssignalen und zwecks Steuerung des Kommutierens von Kanälen der Ausgangsstrahlung wird ein nichtlineares optisches Element vorgeschlagen, der einen nichtlinearen Phasenmodulator (1), Halbleiterlaser (3) und Spiegel (6, 7, 8) enthält. Die Verstärkung der Leistung optischer Signale wird durch das Vorhandensein aktiver Laserelemente (3) gewährleistet. Das Kommutieren der Kanäle erfolgt durch das Einschalten von Injektionsströmen der entgegengesetzten Laser (3), die an ein- und derselben Achse gelegen sind, und durch optische Spiegelverschlüsse (2), die sich in der gleichen Achse befinden.

FIG.1

# NICHTLINEARES OPTISCHES ELEMENT

Die vorliegende Erfindung betrifft das Gebiet der Auswertung von Informationen, die durch optische Signale übertragen werden, so Vorrichtungen mit Verstärkung optischer Signale.

Bekannt ist die Vorrichtung "Bistabile optische Kette, bei der innerhalb des Resonanzbereichs ein Sättigungsabsorber verwendet wird", die es gestattet, eine zweistellige Hysterese-Abhängigkeit der Ausgangsleistung der optischen Strahlung in Übereinstimmung mit der Eingangsleistung zu erzeugen (USA Patent Nr. 3.610.731). Das Hauptelement der Vorrichtung wie auch in ihrem Analogon (USA-Patent Nr. 3.813.605) ist ein Fabry-Perot-Interferometer, der mit absorbierendem Gas $SF_6$ gefüllt ist, das die Funktion eines Sättigungsabsorbers erfüllt. Der Absorptionskoeffizient verändert sich nichtlinear in Übereinstimmung mit der Lichtintensität. Beim Erreichen eines bestimmten Niveaus der Strahlung wird die Vorrichtung aufgehellt, was zu einer drastischen Erhöhung der Ausgangsleistung der Strahlung führt.

Die Verwendung des $SF_6$ Gases als ein optischer Absorber schränkt den Einsatzbereich des Gerätes auf Laborbedingungen zur Durchführung physikalischer Forschungen ein. Die Notwendigkeit des Einsatzes einer äußeren Quelle des Aufpumpens der optischen Strahlung gehört ebenfalls zu den Mängeln dieser Vorrichtung.

Von bekannten Geräten ist die Vorrichtung, die einen optischen Transistor darstellt, der Funktionen der Verstärkung optischer Signale, eines optischen Generators, eines Begrenzers und einer Speicherzelle erfüllt sowie ein Verzweiger des Ausgangssignals in zwei Richtungen - zwei Kanäle ist (UdSSR-Urheberschein Nr. 1225386) ihrem technischen Wesen nach der angemeldeten Anlage besonders nahe.

Zu den wichtigsten Vorteilen der Vorrichtung gehören: Kleine Abmessungen, die Möglichkeit der integralen Ausführung, Erfüllung mehrerer Funktionen, hoher Koeffizient der Verstärkung, die Möglichkeit der Umsetzung des optischen Signals auf die beliebige der 8-10 Frequenzen, die im optischen Transistor vermittels der Änderung der Stromwerte in Lasern oder der Spannung im Modulator möglich sind.

Zu den Mängeln gehören:
- Obligatorisches Einschalten beider Ausgangskanäle, wozu eine zusätzliche Vorrichtung zum Blokkieren eines Kanals bei der Kommutation erforderlich ist;
- beträchtliches Niveau des Eingangssignals, weil gerade durch die Leistung dieser Signale die Modulierungszelle endgültig aufgehellt und das optische Feld im gesamten Raum der Resonanzvorrichtung hergestellt wird, der durch äußere (Eingangs-)Spiegel eingeschränkt ist.

Unter Berücksichtigung des optischen Flecks von 5 $\mu m$ des Ein-Modus-Kabels wird im Kristall selbst bei beträchtlicher Apertur und starker Dispersion nur ein geringerer Bereich des nichtlinearen Modulators aufgehellt. Auf diese Weise ist der optische Transistor gegenüber der anfänglichen Stimmung des Modulators sensibel, weil der Eingangsstrahl senkrecht zum optischen Weg des Resonators verläuft. Bei solcher Variante entfällt das Energieumpumpen zwischen den Moden, die an senkrechten Richtungen des Phasenmodulators vorhanden sind. Nur ein geringer Teil des Umfangs des Modulators, der durch die Strahlung des Eingangssignals aufgehellt ist, "arbeitet" zugunsten der effektiven Aufhellung, also des Umpumpens der Energie des Eingangssignals zum Aufhellen des Phasenmodulators.

Der Erfindung liegt die Aufgabe zugrunde, die Schwellensensibilität des optischen Elements gegenüber Eingangssignalen zu erhöhen und das Kommutieren der Kanäle der Ausgangsleistung zu steuern.

Diese Aufgabe wird dadurch gelöst, daß im nichtlinearen optischen Element, das zwei Laser mit Außen- und Innenspiegel sowie einen Phasenmodulator enthält, der zwischen den Lasern in gleicher Achse liegt und mit Innenspiegeln der Laser ein nichtlineares Fabry-Perot-Interferometer bildet, der Phasenmodulator erfindungsgemäß in zwei Sektionen geteilt wird, so daß ihre Verbindungsflächen einen halbtransparenten Spiegel bilden, der mit der optischen Achse einen Winkel von 45° hat. Dabei
- können auf Eingangsflächen des Phasenmodulators mehrschichtige Interferenz-Überzüge aufgetragen sein;
- können die Sektionen des Phasenmodulators über Elektroden, die auf ihre oberen Teile aufgetragen sind, elektrisch mit einer Spannungsquelle verbunden sein;
- können sich zwei Verschlußplatten aus elektrooptischem Material mit Elektroden auf der oberen und der unteren Fläche an der optischen Achse symmetrisch der Achsenlinie befinden.

Das Vorhandensein von zwei elektrooptischen Verschlußplatten, die gegenüber der Senkrechtachse des Phasenmodulators symmetrisch gelegen sind, sowie der Spiegel, die sich im Bereich des Phasenmodulators und an dessen optischen Eingangskontakten befinden, gestattet es, der Vorrichtung neue Eigenschaften zu verleihen, die sich von den Eigenschaften des bekannten Elements unterscheiden, und zwar:

1. Die Erhöhung der Sensibilität des optischen Elements, dadurch bedingt, daß in der angemeldeten Vorrichtung geringere Werte der Eingangssignale zulässig sind, die für das Aufhellen des Phasenmodulators erforderlich sind. Das bedeutet, daß sich infolge der Änderung des optischen Wegs des Eingangssignals durch die Reflexion vom Spiegel, der in einem Winkel von 45° gelegen ist, und durch die Ausbreitung der Strahlung des Eingangssignals entlang der optischen Hauptachse die optische Länge der Verbindung zwischen dem Eingangssignal und dem Medium des Phasenmodulators vergrößert.

2. Die Möglichkeit des Kommutierens nach dem beliebigen der beiden Kanäle einzeln oder gleichzeitig. Das wird durch den Einsatz elektrooptischer Verschlußspiegel erreicht, deren Transmission von der Steuerspannung abhängt. Das Absperren beider Kanäle gestattet es dem Eingangssignal, über den Phasenmodulator hindurchzugehen.

3. Die Verringerung der Spektralbreite der Wellenlänge der Ausgangsstrahlung im Vergleich zur Spektrumbreite des Ausgangssignals, die darauf zurückzuführen ist, daß der Außenresonator mit Hilfe schaltbarer Verschlüsse gebildet wird, was zur geringeren Dispersion der Impulse in optischen Trakten führt.

4. Die Möglichkeit der Steuerung des Pegels des Ausgangssignals durch die Änderung der Spannung an elektrooptischen Verschlüssen. Die Spannung an den Verschlüssen erfüllt die Funktion der Transmission.

Die wichtigsten Besonderheiten und Vorteile des angemeldeten nichtlinearen optischen Elements gegenüber dem Stand der Technik sind:
- die erhöhte Sensibilität gegenüber dem Eingangssignal;
- die Möglichkeit des Kommutierens der Ausgangssignale und der Regelung deren Ausgangspegels;
- die Möglichkeit, die Spektralbreite der Ausgangsstrahlung zu verringern;
- die Möglichkeit, die Ausgangscharakteristik der Vorrichtung zu steuern und sie als:
- einen optischen Verstärker
- einen optischen Generator
- eine optische Speicherzelle
- einen optischen Begrenzer zu verwenden;
- das Arbeitsregime in mehreren Frequenzen - die Möglichkeit, 8 - 10 Trägerfrequenzen zu generieren, die Steuerung durch Injektionsströme und durch die Spannung im Phasenmodulator;
- die Möglichkeit einer integralen Ausführung sowie integrale Zusammensetzung mit Elementen der Faseroptik.

Die Erfindung wird anhand von Beispielen für ihre Ausführung und unter Bezugnahme auf die Zeichnungen erläutert:

In Fig. 1 ist das Funktionsschema des erfindungsgemäßen nichtlinearen optischen Elements dargestellt;

Fig. 2 ist die Charakteristik der Intensität der Ausgangsstrahlung in Abhängigkeit von der Eingangsstrahlung im Arbeitsregime mit zwei stabilen Zuständen;

Fig. 3 stellt die Charakteristik der Intensität der Ausgangsstrahlung in Abhängigkeit von der Eingangsstrahlung im Regime der Differentialverstärkung dar;

Fig. 4 stellt eine optisch integrierte Variante des nichtlinearen optischen Elements dar.

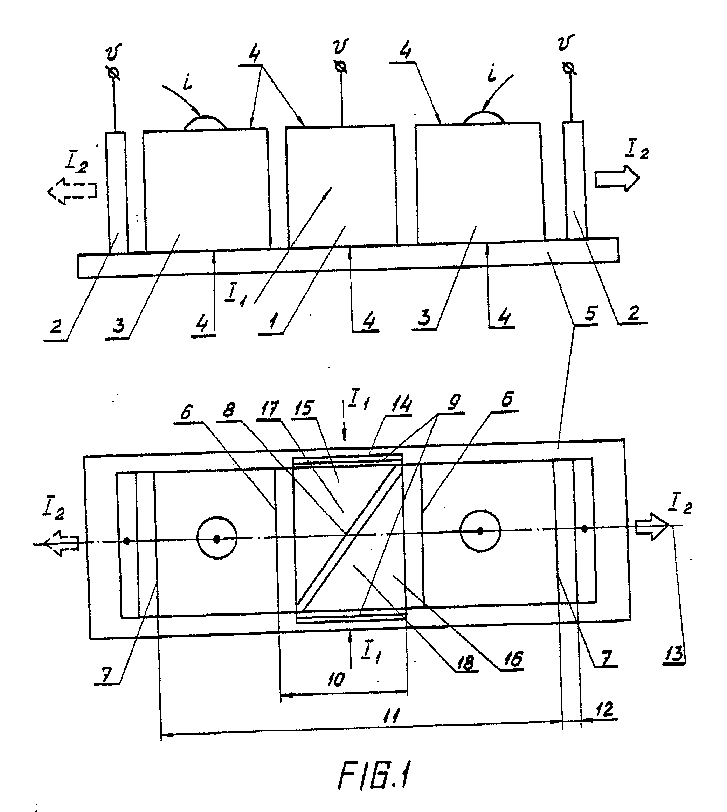

Das nichtlineare optische Element (Fig. 1) enthält einen nichtlinearen Phasenmodulator 1, elektrooptische Verschlüsse 2 und Laser 3, die in einundderselben Achse gelegen sind. Auf der oberen und der unteren Oberfläche der Halbleiterlaser 3, des nichtlinearen Phasenmodulators 1 und der Verschlüsse 2 befinden sich optische Kontakte 4 mit Elektroden. Die oberen Elektroden haben elektrische Anschlüsse zur Verbindung mit Stromquellen. Als untere Elektrode wird die Unterlage 5 verwendet, die zugleich die Rolle eines Wärmeableiters für die ganze Vorrichtung spielt. Auf der Unterlage 5 werden alle Teile des optischen Elements untergebracht.

Der Phasenmodulator 1 mit den Spiegeln 6 der Halbleiterlaser 3 bildet ein nichtlineares Fabry-Perot-Interferometer 10.

Die Halbleiterlaser 3 mit den Spiegeln 6 und 7 des Resonators bilden die linke und die rechte Sektion des optischen Transistors.

Die Halbleiterlaser 3 und der Phasenmodulator 1, die mit Rückkopplung erfaßt sind, zustandegebracht von den Spiegeln 7, bilden den Resonator der gesamten Vorrichtung, der das Lichtfeld einzelner Elemente in das einheitliche Feld der gesamten Vorrichtung vereint. Das ist der Hauptresonator 11. Die optischen Verschlüsse 2, die durch die Spannung (oder durch optische Signale) gesteuert werden, gestatten es, beide oder einen Kanal zu öffnen bzw. zu schließen. Der Phasenmodulator 1 besteht aus zwei Sektionen, die sich bei der Verbindung der Spiegel 8 mit einem Winkel von 45° gegenüber der optischen Hauptachse der Vorrichtung bilden. Die Eingangsoberflächen 14 des Phasenmodulators 1 enthalten mehrschichtige Interferenz-Überzüge 9, die beim Durchdringen des Eingangssignals in den Phasenmodulator 1 die Funktion eines Transmitters (oder eines Aufhellers) erfüllen, zugleich aber Reflexionsfilter für Strahlung hoher Intensität sind, die sich im Hauptresonator und im Phasenmodulator bildet. Die Innenoberflächen der optischen Verschlüsse 2 bilden die Außenresonatoren 12 des optischen Elements, die es gestatten, optische Impulse mit einer Breite bis zu 20 Kilohertz gegenüber der Strahlungsfrequenz zu formieren.

Die Vorrichtung funktioniert folgendermaßen:

Das äußere optische Signal fehlt. Der Laser 3 arbeitet im Regime der kohärenten Strahlung, der Phasenmodulator 1 steht unter Einfluß dieser Strahlung, aber ihre Intensität reicht nicht aus, um den nichtlinearen Absorber des Modulators vollständig aufzuhellen. Dabei befindet sich das nichtlineare Fabry-Perot-Interferometer 10 in einem Zustand, der sich vom Resonanzzustand unterscheidet. Dabei kann der Wert der Stimmung vom Resonanzzustand Ø mit Hilfe der Spannung U geregelt werden, die den Brechungsindex des Phasenmodulators 1 steuert. Die anfängliche Verstimmung bestimmt die Art der Charakteristik und folglich auch die Funktionsmöglichkeiten der angemeldeten Vorrichtung.

Beim Geben eines äußeren optischen Signals füllt dessen zusätzliche Energie, die in den Phasenmodulator 12 über die Spiegel 8 des Phasenmodulators entlang der optischen Hauptachse 13 der Vorrichtung kommt, das Medium zwischen den Spiegeln und beendet das Aufhellen des nichtlinearen Fabry-Perot-Interfereometers 10. Diese Eingangsstrahlung verschiebt das nichtlineare Fabry-Perot-Interferometer 10 zur Resonanz. Das bedeutet, daß sich der allgemeine Wert der Intensität des Lichtfeldes durch Resonanzeigenschaften vergrößert, was zum weiteren Anstieg des Brechungsindexes n führt, der von der resonanzinternen Intensität des Lichtfeldes I abhängt:

$$n = n_0 + n_z I,$$

wo $n_z$ der Brechungsindex des Materials bei fehlender Strahlung ist. Die Rückkopplung, die mit Hilfe der Spiegel 6 erfolgt, ist positiv. Dadurch vollzieht sich ein sprunghafter Übergang des nichtlinearen Fabry-Perot-Interferometers in den Resonanzzustand.

Das führt dazu, daß der Hauptresonator 11, der die Resonatoren der Laser 3 und den Phasenmodulator 1 verbindet, in Resonanz gestimmt wird. Im Raum zwischen den Spiegeln 7 wird ein einheitliches optisches Feld hergestellt, das die Spitzenintensität erreicht und das optische System in den Resonanzzustand umkippt, dessen Nahen durch die Resonanzstimmung des nichtlinearen Fabry-Perot-Interferometers 10 und durch die Rückkopplung der Spiegel 7 formiert wurde. Auf diese Weise ist die Resonanzstimmung des Hauptresonators einem Abreißen ähnlich, das durch den sprunghaften Übergang des Phasenmodulators 1 zur Resonanz initiiert wird. Die hohe Steilheit der Abreißcharakteristika der optischen Bistabilität, die den kritischen Übergang in den neuen Phasenzustand in der Vorrichtung wiederspiegelt, wird durch die konsequente Abfolge von Erscheinungen der optischen Stimmung des nichtlinearen Fabry-Perot-Interferometers 10 und des Hauptresonators 11 wie auch durch die Rückkopplung zwischen ihnen, herbeigeführt über das allgemeine optische Feld, verstärkt.

Die optische Strahlung großer Intensität befindet sich zwischen den Spiegeln 7 und kann nicht über die optischen Kontakte des Modulators 1 nach außen gelangen. Diese Kontakte werden durch die Spiegel 8 versperrt, deren Transmissionsvermögen von der Lichtintensität abhängt - der Reflexionskoeffizient vergrößert sich in Übereinstimmung mit der Leistung, der sie ausgesetzt werden.

Da die Transparenz der Außenspiegel 7 ($T_1$) größer ist als die der Innenspiegel 6 ($T_z$), gelangt die Strahlung nach außen bei abgeschalteten Verschlüssen 2 und verbreitet sich nach links und nach rechts vom optischen Element. Beim Geben der Spannung zum Beispiel auf den rechten Verschluß 2 ändert sich der Brechungsindex, und der Verschluß funktioniert als ein Interferenzspiegel, indem er den äußeren Resonator 12 des optischen Elements formiert; mit dem gleichzeitigen Kommutieren in den linken Kanal vollzieht sich die Rückkopplung auf optische Ausgangsimpulse, was bekanntlich zur Einengung der Spektrallinie der Strahlung führt. Beim Regeln der Spannung an beiden Verschlüssen 2 kann die Leistung des Ausgangssignals verändert (bzw. gedrosselt) sowie die Spektralbreite der optischen Strahlung verändert werden.

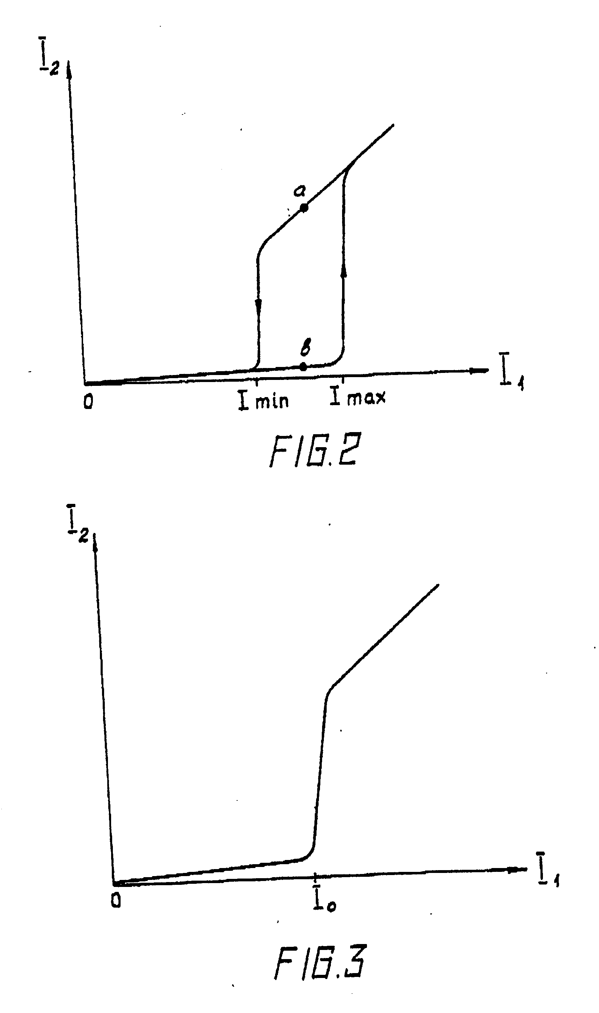

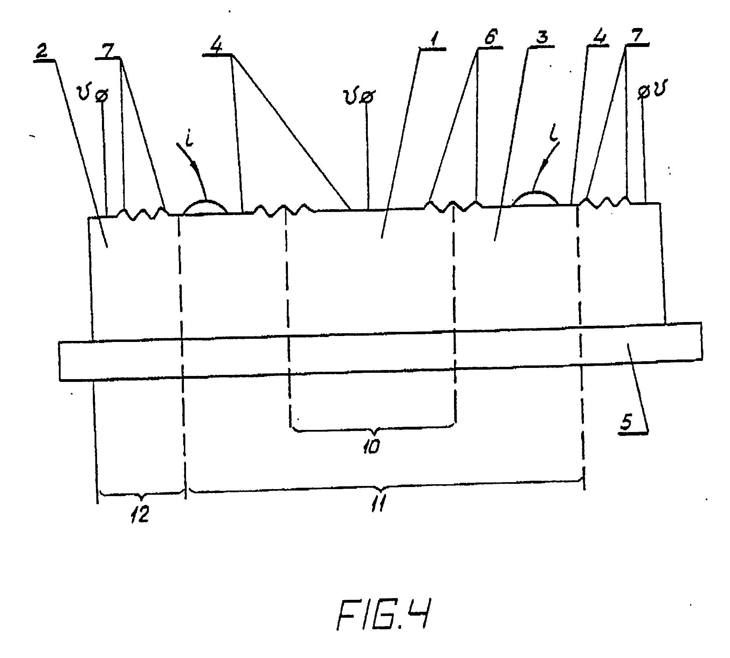

Die oben beschriebene Arbeitsweise der optischen Vorrichtung entspricht den beiden Charakteristika (Fig. 2, 3). Der Unterschied besteht allerdings darin, daß der übergang in den "oberen" Zustand "a" beim Regime, das dem bistabilen Regime entspricht (Fig. 2), bei einem Wert des Eingangssignals $I_1$ erfolgt, der größer ist als $I_{max}$. Die Rückkehr in den "unteren" Zustand "b" vollzieht sich bei der Verringerung der resonanzinternen Intensivität $I_1$ auf den Wert $I_{min}$ und weniger. Diese Regelung erfolgt entweder durch die Reduzierung des Aufpumpens der Laser 3 mit dem Strom oder durch die Veränderung der Spannung im Phasenmodulator 1 mit gleichzeitiger Veränderung seiner physikalischen Parameter - der Absorption und der Brechungsindices. Im Regime der Differentialverstärkung - dem "Trioden-Regime" -, das es gestattet, optische Signale zu verstärken, die auf den beliebigen der beiden optischen Kontakte kommen, vollzieht sich der Übergang in den Zustand der erhöhten optischen Leistung beim Geben des optischen Signals auf den Eingang und hält in Übereinstimmung mit der Dauer des Eingangsimpulses an. Dabei bleibt die Wellenlänge der Ausgangsstrahlung konstant oder ändert sich auf beliebige der 8-10 Wellenlängen, die durch das Paar der über den Phasenmodulator 1 verbundenen Laser 3 erzeugt werden. Die Änderung der Wellenlänge des Trägers vollzieht sich bei der Änderung der Aufpumpströme der Laser 3 und bei der Änderung der Spannung im Phasenmodulator 1 mit einem Intervall von rund 1,5 nM im Bereich von 15 nM.

Bei der Herstellung der Vorrichtung kommt eine konventionelle Halbleiterlaser-Technologie auf der Grundlage von drei oder vier Komponentenlösungen auf der Basis von A B, A B zur Anwendung. Auf die Laser 3 werden optische Kontakte 4 aufgetragen. Die Kontakte 4 werden sowohl an den Sektionen des Modulators 1 als auch an den Verschlüssen 2 gefertigt. Mit Hilfe von Lot werden einzelne Teile des optischen Elements auf der elektrisch leitenden Unterlage 5 befestigt, die zugleich eine wärmeableitende Vorrichtung darstellt. An alle oberen Elektroden werden elektrische Anschlüsse angelötet. Der Phasenmodulator wird aus elektrooptischem Halbleiter- oder dielektrischem Material gefertigt. Der Innenspiegel bildet sich bei der Herstellung durch das Diagonlschneiden des Modulators und durch das Ankleben einzelner Sektionen direkt oder mit einer Zwischenschicht zusätzlichen optischen Materials in Form eines planparallelen Plättchens gegebener Stärke.

Die Integralvariante des optischen Elements wird mit Hilfe moderner Methoden der Halbleiter-Mikroelektronik und der Integraloptik gefertigt. Auf eine Unterlage werden Heterolaser 3 und der Phasenmodulator 1 mit Überstrukturgitter, der im selektiven Epitaxieverfahren gezüchtet wird, in Reihe formiert. Die Breggowschen Spiegel werden beim Fotoätzen im Aufhellungs-Interferenzfeld gefertigt. Die Anschlüsse und Kontakte werden im obengenannten Verfahren hergestellt. Bei der Herstellung des optischen Elements kommen Halbleiter der Gruppen $A^3B^5$, $A^2B^6$ zur Anwendung.

Bevorzugte Anwendungsbereiche der angemeldeten Erfindung sind lichtleitende Verbindungs- und Datenübertragungssysteme, Systeme der Integraloptik und optische Kreise für Rechentechnik.

**Ansprüche**

1. Nichtlineares optisches Element, das einen Phasenmodulator (1) und zwei Laser mit Außen- (7) und Innenspiegel (6) umfaßt, dadurch gekennzeichnet, daß der Phasenmodulator (1) in zwei Sektionen (15, 16) geteilt ist, so daß deren Verbindungsflächen mindestens einen halbtransparenten Spiegel (8) bilden, der mit der optischen Achse einen Winkel von 45° einschließt.

2. Nichtlineares optisches Element nach Anspruch 1, dadurch gekennzeichnet, daß auf Eingangsflächen (14) des Phasenmodulators (1) mehrschichtige Interferenz-Überzüge (9) aufgetragen sind.

3. Nichtlineares optisches Element nach Anspruch 1 oder 2, dadurch gekennzeichnet, daß die Sektionen (15, 16) des Phasenmodulators (1) über Elektroden (17, 18), die auf ihre oberen Teile (15, 16) aufgetragen sind, elektrisch an eine Spannungsquelle (U) anschließbar sind.

4. Nichtlineares optisches Element nach einem oder mehreren der vorangehenden Ansprüche, dadurch gekennzeichnet, daß in der optischen Achse (13) zwei Verschlußplatten (2) aus elektrooptischem Material mit Elektroden auf der oberen (19) und der unteren (4) Fläche symmetrisch bezüglich der Achsrichtung angeordnet sind.

FIG.1

FIG.2

FIG.3

FIG.4